# EUROPEAN PATENT APPLICATION

(11) **EP 4 685 351 A1**
(43) Date of publication of application: **28.01.2026**
(21) Application number: 24792733.8
(22) Date of filing: 18.04.2024
(51) Int. Cl.: F04B 49/06, F04B 49/08

(54) **HYDRAULIC SYSTEM AND METHOD FOR CONTROLLING HYDRAULIC SYSTEM**

(30) Priority: 19.04.2023 JP 2023068491
(71) Applicant: Sumitomo Precision Products Co., Ltd., Amagasaki-shi, Hyogo 660-0891 (JP)
(72) Inventor: HASEGAWA Kazuomi, Amagasaki-shi, Hyogo 660-0891 (JP)
(74) Representative: BRP Renaud & Partner mbB Rechtsanwälte Patentanwälte Steuerberater
(86) International application number: PCT/JP2024/015411
(87) International publication number: WO 2024/219461

(57) **Abstract**

A hydraulic system (1) includes a variable displacement pump (3), an electric motor (5), a controller (6), and a sensor (a pressure sensor (61)). The variable displacement pump has the mechanical compensator (31) that changes a pump displacement. Based on a measurement signal of the sensor, the controller outputs a control signal for increasing a rotational speed of the electric motor in a case where the supply flow rate falls below a required flow rate of the hydraulic device, and the controller outputs a control signal for decreasing the rotational speed of the electric motor in a case where the supply flow rate exceeds the required flow rate of the hydraulic device.

## Description

### TECHNICAL FIELD

The technique disclosed herein relates to a hydraulic system and a method for controlling a hydraulic system.

### BACKGROUND ART

Patent Document 1 describes a hydraulic system used in the technical field of industrial machines such as an injection machine. This conventional hydraulic system includes a variable displacement swash plate pump through which hydraulic fluid is supplied to an actuator. A control device of this system controls both the rotational speed of a servomotor that drives the pump and a change in the pump displacement made by adjusting the angle of a swash plate of the swash plate pump.

The control device switches the first mode, the second mode, and the third mode. In the first mode, the control device fixes the swash plate pump at a small pump displacement, and changes the rotational speed of the servomotor in accordance with a command flow rate. In the second mode, the control device fixes the rotational speed of the servomotor at a low speed, and changes the pump displacement of the swash plate pump in accordance with the command flow rate. In the third mode, the control device fixes the pump displacement of the swash plate pump at the maximum displacement, and changes the rotational speed of the servomotor in accordance with the command flow rate.

### CITATION LIST

### PATENT DOCUMENT

Patent Document 1: Japanese Patent No. 5143619

### SUMMARY OF THE INVENTION

### TECHNICAL PROBLEM

Various hydraulic actuators, such as aileron actuators, flap actuators, or gear actuators, are installed on an aircraft. A centralized hydraulic source in the hydraulic system for the aircraft supplies hydraulic fluid to each of these hydraulic actuators.

In recent years, electrification of aircraft has been promoted. Conventional hydraulic systems have used power of an engine, but instead of an engine, using a constant-speed electric motor and a variable displacement pump as hydraulic sources in the hydraulic system has been studied. The variable displacement pump changes the discharge flow rate in accordance with the flow rate of the hydraulic fluid required to operate each hydraulic actuator. If the variable displacement pump is, for example, a pump including a mechanical compensator that automatically changes the pump displacement in accordance with the discharge pressure, the hydraulic system can be simplified.

However, for a hydraulic system including a constant-speed electric motor and a variable displacement pump, it is impossible to increase the discharge flow rate of the variable displacement pump any more in a case where the pump displacement reaches the maximum. That is, the control range of the flow rate of this hydraulic system is small.

The technique disclosed herein provides an electric hydraulic system where the range of control of the flow rate is large.

### SOLUTION TO THE PROBLEM

The technique disclosed herein relates to a hydraulic system. This hydraulic system includes:
a variable displacement pump connected to at least one hydraulic device through a supply path and that supplies hydraulic fluid to the hydraulic device through the supply path;
an electric motor coupled to the variable displacement pump and that drives the variable displacement pump;
a controller electrically connected to the electric motor and that controls operation of the variable displacement pump by outputting a control signal to the electric motor; and
a sensor that outputs, to the controller, a measurement signal relating to a supply flow rate of the hydraulic fluid supplied to the hydraulic device,
   wherein
the variable displacement pump includes a mechanical compensator that changes a pump displacement by receiving a pressure of the hydraulic fluid in the supply path, and
based on the measurement signal from the sensor, the controller outputs a control signal for increasing a rotational speed of the electric motor in a case where the supply flow rate falls below a required flow rate of the hydraulic device, and the controller outputs a control signal for decreasing the rotational speed of the electric motor in a case where the supply flow rate exceeds the required flow rate of the hydraulic device.

The hydraulic system is a system that supplies hydraulic fluid to the hydraulic device. The hydraulic device is a hydraulic actuator and/or a hydraulic motor.

The hydraulic system includes the variable displacement pump and the electric motor. The variable displacement pump may be, for example, a variable displacement swash plate pump. The variable displacement pump may be, for example, a variable displacement angled pump. The variable displacement pump may be, for example, a variable displacement vane pump.

The variable displacement pump has the mechanical compensator. The compensator changes the pump displacement in accordance with the pressure of the hydraulic fluid in the supply path. The compensator automatically changes the pump displacement of the variable displacement pump, and the controller does not change the pump displacement of the variable displacement pump, and thus the hydraulic system can be simplified.

The electric motor may be, for example, a servomotor. The controller may be a servo controller. The controller controls the operation of the variable displacement pump, more specifically, the rotational speed of the variable displacement pump by controlling the electric motor.

The sensor outputs the measurement signal relating to the supply flow rate of the hydraulic fluid supplied to the hydraulic device. The sensor may be, for example, a pressure sensor installed in the supply path and configured to measure the pressure of the hydraulic fluid in the supply path. The pressure of the hydraulic fluid in the supply path relates to the supply flow rate of the hydraulic fluid supplied to the hydraulic device. When the flow rate of supply to the hydraulic device falls below the required flow rate of the hydraulic device, the pressure of the hydraulic fluid in the supply path decreases. The controller can determine whether the flow rate of supply to the hydraulic device falls below the required flow rate of the hydraulic device based on the measurement signal from the sensor. Note that the sensor is not limited to the pressure sensor.

The compensator changes the pump displacement in accordance with the pressure of the hydraulic fluid in the supply path. Even if the controller does not control the speed of the variable displacement pump, the variable displacement pump can discharge the hydraulic fluid to satisfy the required flow rate of the hydraulic device.

In a case where the flow rate of supply to the hydraulic device falls below the required flow rate of the hydraulic device while the pump displacement of the variable displacement pump is made maximum by the compensator, the variable displacement pump cannot satisfy the required flow rate by itself. Thus, the controller outputs the control signal for increasing the rotational speed of the electric motor. The rotational speed of the variable displacement pump increases, and the discharge flow rate of the variable displacement pump increases. As a result, the variable displacement pump can satisfy the required flow rate. In a case where the supply flow rate exceeds the required flow rate of the hydraulic device, the controller outputs the control signal for decreasing the rotational speed of the electric motor.

Thus, while the hydraulic system is a simple electric hydraulic system including the variable displacement pump with the mechanical compensator, the hydraulic system can increase the range of control of the flow rate.

The controller may set the rotational speed of the electric motor to a first speed, which is a low speed, in a low flow rate range where a discharge flow rate of the variable displacement pump is low; and the controller may make the rotational speed of the electric motor faster than the first speed and higher as the required flow rate increases in a high flow rate range where the discharge flow rate is higher than in the low flow rate range, and
the pump displacement of the variable displacement pump may increase by the compensator in the low flow rate range as the required flow rate increases, and may be maximum in the high flow rate range.

In the low flow rate range, the rotational speed of the electric motor is the first speed, which is a low speed, and thus, the hydraulic system can reduce the power consumption. For example, if the first speed is adjusted to a rotational speed at which the electric motor and/or the variable displacement pump operate efficiently, the hydraulic system can further save the power. The first speed may be constant, or may be inconstant. In the low flow rate range, the compensator adjusts the pump displacement, and thus, even if the rotational speeds of the electric motor and the variable displacement pump are constant, the variable displacement pump can satisfy the required flow rate.

Further, in the low flow rate range, the rotational speeds of the electric motor and the variable displacement pump are low, and thus there are fewer situations where the variable displacement pump keeps operating at high speed. Since wear of the variable displacement pump is reduced, the variable displacement pump has a longer lifetime.

In the high flow rate range, the pump displacement of the variable displacement pump is maximum. That is, the pump displacement is constant. In contrast, the controller increases the rotational speed of the electric motor as the required flow rate increases. Since the rotational speed of the variable displacement pump is higher than the first speed, the variable displacement pump can satisfy the required flow rate.

The controller may continuously increase the discharge flow rate of the variable displacement pump in an entire range from the low flow rate range to the high flow rate range.

The controller can continuously increase the discharge flow rate of the variable displacement pump in a large flow rate range by combination of changing the pump displacement of the variable displacement pump and changing the rotational speed of the electric motor.

The hydraulic device may include a flight control actuator and a takeoff/landing actuator for an aircraft.

Examples of the flight control actuator include an aileron actuator, an elevator actuator, and/or a rudder actuator. The flow rate of the hydraulic fluid required to operate the flight control actuator is relatively low.

Examples of the takeoff/landing actuator include a gear actuator that retracts/extends a gear strut, a door actuator that opens/closes the door of a compartment, and/or a down-lock release actuator that unlocks a down-lock mechanism fixing the gear strut in an extended state. The takeoff/landing actuator may include a flap actuator and/or a slat actuator. These takeoff/landing actuators have a long stroke, and thus, these takeoff/landing actuators require the hydraulic fluid at a relatively high flow rate to operate themselves.

The hydraulic system can change the discharge flow rate of the variable displacement pump over a large range from the low flow rate range to the high flow rate range, and thus is suitable for electric aircraft hydraulic systems including the flight control actuator and the takeoff/landing actuator.

The controller may set the rotational speed of the electric motor to a first speed, which is a low speed, during flight of the aircraft in which the flight control actuator works and the takeoff/landing actuator does not work, and
the controller may make the rotational speed of the electric motor faster than the first speed and higher as the required flow rate increases during takeoff and landing of the aircraft in which the flight control actuator and the takeoff/landing actuator work.

During flight of the aircraft, the flight control actuator works, and the takeoff/landing actuator does not work. As previously described, the required flow rate of the flight control actuator is low. The flight control actuator operates over a long period of time during flight of the aircraft. During flight of the aircraft, the controller sets the rotational speed of the electric motor to first speed, which is a low speed. When the variable displacement pump changes the pump displacement, the variable displacement pump can satisfy the required flow rate of the flight control actuator during flight. In addition, the rotational speed of the electric motor is low over a long period of time, which helps save the power of the hydraulic system.

During takeoff/landing of the aircraft, the takeoff/landing actuator in addition to the flight control actuator works. As previously described, the required flow rate of the takeoff/landing actuator is high. The takeoff/landing actuator operates temporarily during takeoff/landing. During takeoff/landing of the aircraft, the controller increases the rotational speed of the electric motor as the required flow rate increases. When the rotational speed of the variable displacement pump is higher than the first speed, the variable displacement pump can satisfy the flow rate required to operate the flight control actuator and/or the takeoff/landing actuator. While the rotational speed of the electric motor is high, the takeoff/landing actuator operates temporarily, which reduces the power consumption of the hydraulic system. Further, the high-speed operation of the variable displacement pump does not continue for a long time, which helps the variable displacement pump to have a longer lifetime.

Thus, the hydraulic system for the aircraft can appropriately operate each of the flight control actuator and the takeoff/landing actuator as well as achieving power saving and longer lifetime.

The technique disclosed herein relates to a method for controlling a hydraulic system. The hydraulic system includes
a variable displacement pump connected to at least one hydraulic device through a supply path and that supplies hydraulic fluid to the hydraulic device through the supply path, the variable displacement pump including a mechanical compensator that changes a pump displacement by receiving a pressure of the hydraulic fluid in the supply path,
an electric motor coupled to the variable displacement pump and that drives the variable displacement pump,
a controller electrically connected to the electric motor and that controls operation of the variable displacement pump by outputting a control signal to the electric motor, and
a sensor that outputs, to the controller, a measurement signal relating to a supply flow rate of the hydraulic fluid supplied to the hydraulic device.

The method for controlling a hydraulic system includes
in a low flow rate range where a discharge flow rate of the variable displacement pump is low, causing the controller to set a rotational speed of the electric motor to a first speed, which is a low speed, and increasing the pump displacement of the variable displacement pump, by the compensator, as a required flow rate of the hydraulic device increases, and
in a high flow rate range where the discharge flow rate is higher than in the low flow rate range, maximizing the pump displacement of the variable displacement pump, by the compensator, and causing the controller, based on the measurement signal of the sensor, to set the rotational speed of the electric motor faster than the first speed and higher as the required flow rate increases.

According to this control method, the simple electric hydraulic system including the variable displacement pump with the mechanical compensator can increase the range of control of the flow rate.

### ADVANTAGES OF THE INVENTION

According to the hydraulic system and the method for controlling the hydraulic system, the simple electric hydraulic system including the variable displacement pump with the mechanical compensator can increase the range of control of the flow rate.

### BRIEF DESCRIPTION OF THE DRAWINGS

[FIG. 1] FIG. 1 illustrates a hydraulic system.
[FIG. 2] FIG. 2 illustrates an exemplary arrangement of hydraulic actuators on an aircraft.
[FIG. 3] FIG. 3 shows a change in the discharge flow rate of a variable displacement pump, a change in the rotational speed of the variable displacement pump, and a change in the pump displacement of the variable displacement pump with respect to the required flow rate for a hydraulic actuator.
[FIG. 4] FIG. 4 illustrates a procedure of control of an electric motor executed by a controller.

### DESCRIPTION OF EMBODIMENTS

Embodiments of a hydraulic system and a method for controlling a hydraulic system will be described below with reference to the drawings. The hydraulic system and the method for controlling a hydraulic system described herein are merely examples.

### (Configuration of Hydraulic System)

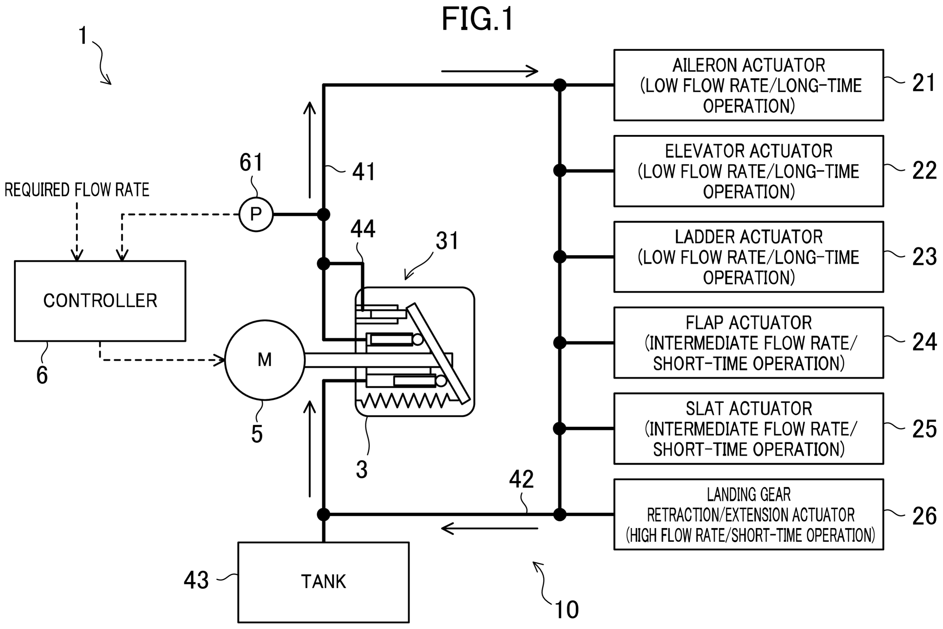

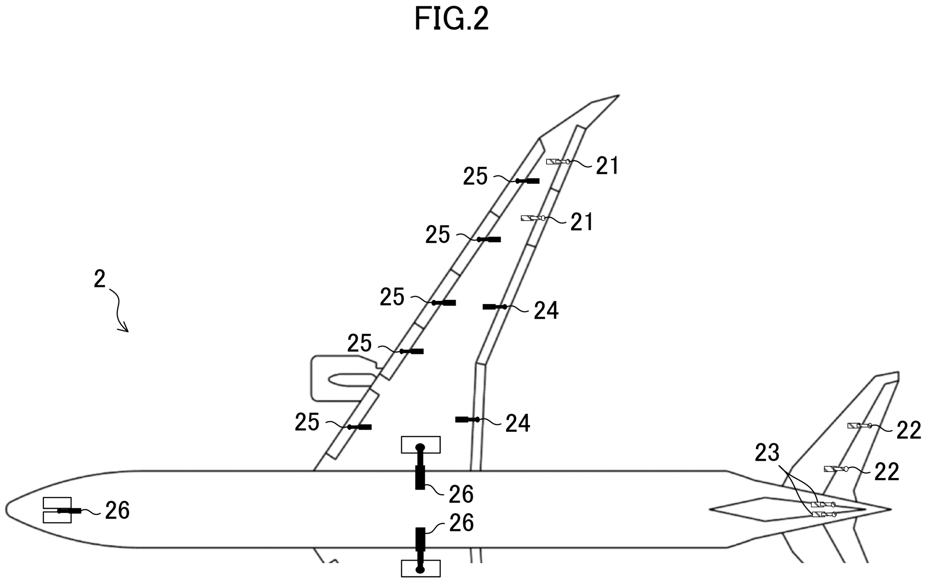

FIG. 1 illustrates a hydraulic system 1. The hydraulic system 1 is a system installed on an aircraft 2 illustrated in FIG. 2. The hydraulic system 1 is a system for supplying hydraulic fluid to each of a plurality of hydraulic devices. As shown in FIG. 2, the hydraulic devices to which the hydraulic system 1 of this disclosure supplies hydraulic fluid include aileron actuators 21, elevator actuators 22, rudder actuators 23, flap actuators 24, slat actuators 25, and landing gear retraction/extension actuators 26. Examples of the landing gear retraction/extension actuators 26 include gear actuators, door actuators, and/or down-lock release actuators. The gear actuator is an actuator that retracts and extends gear struts of a landing gear. The door actuator is an actuator that opens and closes the door of a compartment for housing a landing gear. The down-lock release actuator is an actuator that unlocks a down-lock mechanism for fixing a gear strut in an extended state.

As illustrated in FIG. 2, the aircraft 2 includes a plurality of hydraulic actuators for each of the aileron actuator 21, the elevator actuator 22, the rudder actuator 23, the flap actuator 24, the slat actuator 25, and the landing gear retraction/extension actuator 26. In the following description, each of the aileron actuator 21, the elevator actuator 22, the rudder actuator 23, the flap actuator 24, the slat actuator 25, and the landing gear retraction/extension actuator 26 includes the plurality of hydraulic actuators.

The hydraulic system 1 may supply the hydraulic fluid to some of the hydraulic actuators 21 to 26. The hydraulic system 1 may supply the hydraulic fluid to a hydraulic device different from the hydraulic actuators 21 to 26.

The hydraulic actuators 21 to 26 are, for example, telescopic actuators each including a cylinder and a piston. The aileron actuator 21, the elevator actuator 22, and the rudder actuator 23 are the flight control actuators 21 to 23 that operate during flight and during takeoff and landing of the aircraft 2. The flight control actuators 21 to 23 have a relatively short stroke, while operating as needed over a long duration of time during flight of the aircraft 2. The flow rate of the hydraulic fluid required to operate the flight control actuators 21 to 23 is relatively low.

The flap actuator 24, the slat actuator 25, and the landing gear retraction/extension actuator 26 are actuators that operate during takeoff and landing of the aircraft 2. The flap actuator 24 and the slat actuator 25 have a moderate stroke, while operating temporarily during takeoff and landing of the aircraft 2. The landing gear retraction/extension actuator 26 has a relatively long stroke, while operating temporarily during takeoff and landing of the aircraft 2. The flap actuator 24, the slat actuator 25, and the landing gear retraction/extension actuator 26 may be hereinafter collectively referred to as the "takeoff/landing actuators 24 to 26." The flow rate of the hydraulic fluid required to operate the takeoff/landing actuators 24 to 26 is relatively high.

The hydraulic system 1 includes a pump 3. The pump 3 is a variable displacement pump. The pump 3 may be, for example, a swash plate-type pump as shown in FIG. 1. The pump 3 may also be an angled pump. The pump 3 may be a vane pump. The pump 3 of the hydraulic system 1 may be a known variable displacement pump as needed.

A discharge port of the pump 3 is connected to a supply path 41. The supply path 41 is connected to each of the hydraulic actuators 21 to 26. The hydraulic actuators 21 to 26 are in parallel with the pump 3. The pump 3 uses the supply path 41 to supply the hydraulic fluid to each of the aileron actuators 21, the elevator actuators 22, the rudder actuators 23, the flap actuators 24, the slat actuators 25, and the landing gear retraction/extension actuators 26.

A suction port of the pump 3 is connected to a return path 42. The return path 42 connects the pump 3 with the hydraulic actuators 21 to 26. The return path 42 is connected with a tank 43. The tank 43 is a reservoir that stores the hydraulic fluid.

The hydraulic actuators 21 to 26, the pump 3, the supply path 41, the return path 42, and the tank 43 form a hydraulic circuit 10 of the hydraulic system 1 (see the arrows in FIG. 1).

The pump 3 has a mechanical compensator 31. The compensator 31 is connected with a control path 44. The control path 44 is connected to the supply path 41. The compensator 31 changes the angle of the swash plate by receiving the pressure of the hydraulic fluid discharged through the control path 44 by the pump 3. The mechanical compensator 31 automatically changes the pump displacement of the pump 3 in accordance with the discharge pressure of the pump 3. More specifically, in a case where the flow rates of supply to the hydraulic actuators 21 to 26 fall below the required flow rates for the hydraulic actuators 21 to 26, and accordingly the pressure of the hydraulic fluid in the supply path 41 decreases, the compensator 31 changes the angle of the swash plate to increase the pump displacement of the pump 3. Accordingly, the discharge flow rate of the pump 3 increases, and the flow rates of supply to the hydraulic actuators 21 to 26 are satisfied.

The pump 3 is coupled with an electric motor 5. The electric motor 5 drives the pump 3. The electric motor 5 may be a servomotor, for example.

The electric motor 5 is electrically connected with a controller 6. The controller 6 is electrically connected with a pressure sensor 61. The pressure sensor 61 is provided in the supply path 41. The pressure sensor 61 outputs a measurement signal to the controller 6, where the measurement signal corresponds to the pressure of the hydraulic fluid in the supply path 41. As previously described, the pressure of the hydraulic fluid in the supply path 41 relates to the flow rates of supply to the hydraulic actuators 21 to 26 and the required flow rates for the hydraulic actuators 21 to 26.

The controller 6 is further connected to a higher-level controller. The higher-level controller is, for example, a flight controller. The controller 6 receives a signal that is output by the higher-level controller and that relates to the required flow rate. The required flow rates are the flow rates of the hydraulic fluid required to operate the flight control actuators 21 to 23 and/or the takeoff/landing actuators 24 to 26. The higher-level controller transmits the signal relating to the required flow rates to the controller 6 so that the flight control actuators 21 to 23 and/or the takeoff/landing actuators 24 to 26 operate in accordance with control by a pilot of the aircraft 2 and/or in accordance with the flight status of the aircraft 2.

The controller 6 outputs a control signal to the electric motor 5, where the control signal corresponds to the measurement signal of the pressure sensor 61 and the signal relating to the required flow rate from the higher-level controller. The rotational speed of the electric motor 5 depends on the control signal from the controller 6. As the rotational speed of the electric motor 5 changes, the rotational speed of the pump 3 changes, and as a result, the discharge flow rate of the pump 3 changes.

The sensor of the hydraulic system 1 is not limited to the pressure sensor 61. The hydraulic system 1 may include a plurality of pumps 3 and a plurality of electric motors 5 for redundancy.

### (Control of Hydraulic System)

The hydraulic system 1 is configured as a combination of the variable displacement pump 3 that includes the mechanical compensator 31 and the electric motor 5 that changes the rotational speed in response to the control signal from the controller 6.

In a case where the flow rates of supply to the hydraulic actuators 21 to 26 fall below the required flow rates for the hydraulic actuators 21 to 26, the controller 6 outputs a control signal for increasing the rotational speed of the electric motor 5 to the electric motor 5 based on the required flow rates from the higher-level controller and the measurement signal from the pressure sensor 61. In a case where the flow rates of supply to the hydraulic actuators 21 to 26 exceed the required flow rates for the hydraulic actuators 21 to 26, the controller 6 outputs a control signal for decreasing the rotational speed of the electric motor 5 to the electric motor 5.

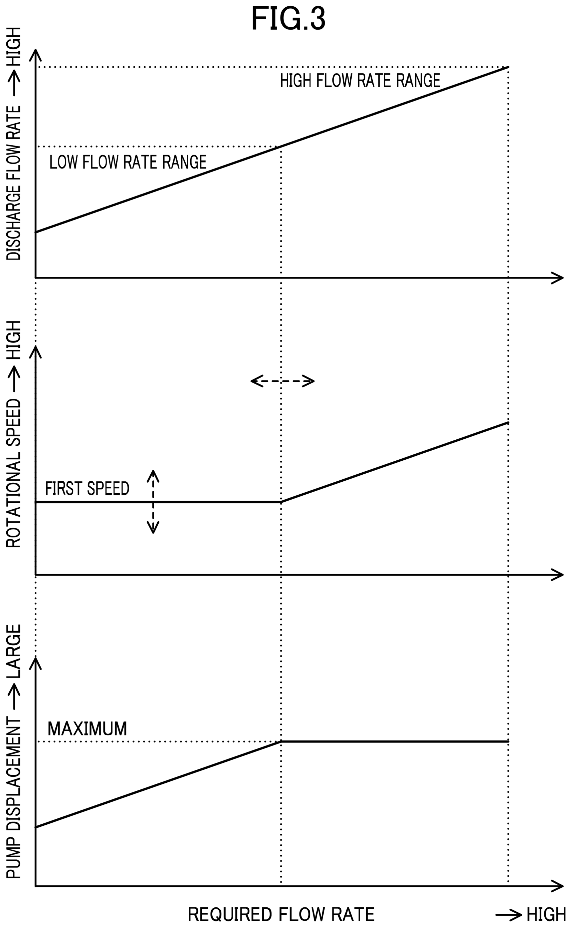

More specifically, as shown in the upper part of FIG. 3, the controller 6 controls the electric motor 5 so that the discharge flow rate of the pump 3 changes continuously from a low flow rate to a high flow rate. As shown in the intermediate part of FIG. 3, the controller 6 makes the rotational speed of the electric motor 5 constant at a first speed, which is a low speed, in a low flow rate range where the discharge flow rate of the pump 3 is low. The low speed as referred to herein means a speed lower than the highest speed of the electric motor 5. As described later, the first speed, which is a low speed, may be set to a speed at which the electric motor 5 and/or the pump 3 operate with high efficiency.

The controller 6 also makes the rotational speed of the electric motor 5 faster than the first speed and higher as the required flow rate increases in a high flow rate range where the discharge flow rate of the pump 3 is higher than in the low flow rate range.

As shown in the lower part of FIG. 3, the compensator 31 of the pump 3 increases the pump displacement of the pump 3 as the required flow rate increases in the low flow rate range where the rotational speed of the electric motor 5 is constant. The compensator 31 also makes the pump displacement of the pump 3 constant at maximum displacement in the high flow rate range.

As a result, as shown in the upper part of FIG. 3, the discharge flow rate of the pump 3 changes continuously from a low flow rate to a high flow rate.

The low flow rate range described above corresponds to when the aircraft 2 is in flight. When the aircraft 2 is in flight, the flight control actuators, that is, the aileron actuators 21, the elevator actuators 22, and the rudder actuators 23 are working. In contrast, when the aircraft 2 is in flight, the takeoff/landing actuators, that is, the flap actuators 24, the slat actuators 25, and the landing gear retraction/extension actuators 26 are not working.

The required flow rates for the flight control actuators 21 to 23 are relatively low. If the rotational speed of the electric motor 5 is made constant at the first speed, which is a low speed, and then the pump displacement of the pump 3 is changed while the rotational speed of the pump 3 is low and constant, the pump 3 can satisfy the required flow rates for the flight control actuators 21 to 23 during flight.

The rotational speed of the electric motor 5 is made constant at a low speed over a long duration of time during flight of the aircraft 2, which helps save the power of the hydraulic system 1. If the first speed of the electric motor 5 is set so that the electric motor 5 and/or the pump 3 operate with high efficiency, the power consumption of the hydraulic system 1 can be further reduced. As indicated by the dashed arrows in the intermediate part of FIG. 3, as the first speed of the electric motor 5 changes, the discharge flow rate of the pump 3 where the pump displacement is maximum changes, and thus the border between the low flow rate range and the high flow rate range changes. The border between the low flow rate range and the high flow rate range is a limit at which the pump 3 can satisfy the required flow rates while the rotational speed of the electric motor 5 is the first speed and the pump 3 is at maximum displacement.

The high flow rate range described above corresponds to when the aircraft 2 takes off and lands. When the aircraft 2 is taking off or landing, the takeoff/landing actuators 24 to 26 in addition to the flight control actuators 21 to 23 are working.

The required flow rates for the takeoff/landing actuators 24 to 26 are relatively high. Thus, even if the pump displacement is maximum, the pump 3 cannot satisfy the required flow rates in a case where the electric motor 5 rotates at the first speed, which is a low speed. Thus, the controller 6 makes the rotational speed of the electric motor 5 higher than the first speed as the required flow rate increases. The pump 3 can satisfy the flow rates required to operate the flight control actuators 21 to 23 and the takeoff/landing actuators 24 to 26. In this case, although the rotational speed of the electric motor 5 becomes higher, the takeoff/landing actuators 24 to 26 operate temporarily, which reduces the power consumption of the hydraulic system 1.

Thus, in the hydraulic system 1, the discharge flow rate of the pump 3 changes continuously over a large range from the low flow rate range to the high flow rate range, thereby enabling the flight control actuators 21 to 23 and the takeoff/landing actuators 24 to 26 to operate appropriately and saving the power of the hydraulic system 1.

In the hydraulic system 1, the electric motor 5 and the pump 3 temporarily operate at high speed, and the pump 3 is kept from continuously operating at maximum displacement and at high speed over a long duration of time. Since wear of the pump 3, a positive displacement pump, is reduced, the pump 3 has a longer lifetime.

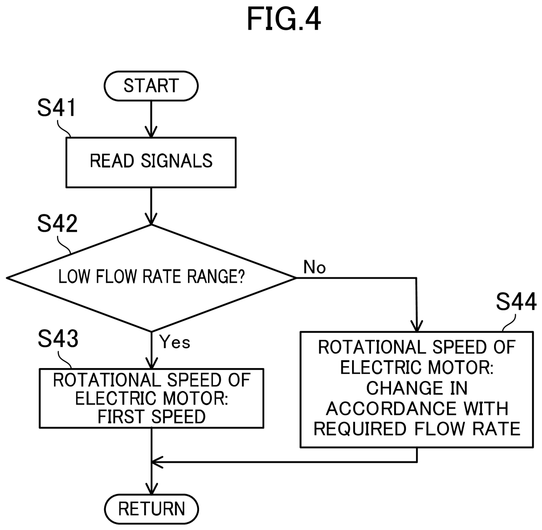

FIG. 4 illustrates a procedure of control of the hydraulic system 1 executed by the controller 6. In step S41 after the start, the controller 6 reads a signal from the higher-level controller and a measurement signal from the pressure sensor 61. Next, in step S42, the controller 6 determines whether the discharge flow rate of the pump 3 is in the low flow rate range. The controller 6 may determine whether the aircraft 2 is in flight (whether the aircraft 2 is taking off/landing) instead of doing the procedure of step S42.

In a case where the determination in step S42 is "Yes," that is, in a case where the discharge flow rate is in the low flow rate range (or in a case where the aircraft 2 is in flight), the controller 6 makes the rotational speed of the electric motor 5 constant at the first speed in step S43.

In a case where the determination in step S42 is "No," that is, in a case where the discharge flow rate is in the high flow rate range (or in a case where the aircraft 2 is taking off/landing), the controller 6 changes the rotational speed of the electric motor 5 in accordance with the required flow rates in step S44.

In the hydraulic system 1 described above, the first speed is constant, but the first speed does not necessarily have to be constant.

The hydraulic system disclosed herein is not limited to an aircraft hydraulic system for controlling the flight control actuators 21 to 23 and the takeoff/landing actuators 24 to 26. The hydraulic system disclosed herein can also be used for hydraulic systems for various industrial machines.

The hydraulic devices to which the hydraulic system supplies hydraulic fluid include a hydraulic motor in addition to the hydraulic actuators.

### DESCRIPTION OF REFERENCE CHARACTERS

- 1: Hydraulic System
- 21: Aileron Actuator (Hydraulic Device)
- 22: Elevator Actuator (Hydraulic Device)
- 23: Rudder Actuator (Hydraulic Device)
- 24: Flap Actuator (Hydraulic Device)
- 25: Slat Actuator (Hydraulic Device)
- 26: Landing gear Retraction/Extension Actuator (Hydraulic Device)
- 3: Pump (Variable Displacement Pump)
- 31: Compensator
- 41: Supply Path
- 5: Electric Motor
- 6: Controller
- 61: Sensor (Pressure Sensor)

## Claims

1. A hydraulic system comprising:
a variable displacement pump connected to at least one hydraulic device through a supply path and that supplies hydraulic fluid to the hydraulic device through the supply path;
an electric motor coupled to the variable displacement pump and that drives the variable displacement pump;
a controller electrically connected to the electric motor and that controls operation of the variable displacement pump by outputting a control signal to the electric motor; and
a sensor that outputs, to the controller, a measurement signal relating to a supply flow rate of the hydraulic fluid supplied to the hydraulic device,
wherein
the variable displacement pump includes a mechanical compensator that changes a pump displacement by receiving a pressure of the hydraulic fluid in the supply path, and
based on the measurement signal from the sensor, the controller outputs a control signal for increasing a rotational speed of the electric motor in a case where the supply flow rate falls below a required flow rate of the hydraulic device, and the controller outputs a control signal for decreasing the rotational speed of the electric motor in a case where the supply flow rate exceeds the required flow rate of the hydraulic device.

2. The hydraulic system of claim 1, wherein
the controller sets the rotational speed of the electric motor to a first speed, which is a low speed, in a low flow rate range where a discharge flow rate of the variable displacement pump is low; and the controller makes the rotational speed of the electric motor faster than the first speed and higher as the required flow rate increases in a high flow rate range where the discharge flow rate is higher than in the low flow rate range, and
the pump displacement of the variable displacement pump increases by the compensator in the low flow rate range as the required flow rate increases, and is maximum in the high flow rate range.

3. The hydraulic system of claim 2, wherein
the controller continuously increases the discharge flow rate of the variable displacement pump in an entire range from the low flow rate range to the high flow rate range.

4. The hydraulic system of any one of claims 1 to 3, wherein
the hydraulic device includes a flight control actuator and a takeoff/landing actuator for an aircraft.

5. The hydraulic system of claim 4, wherein
the controller sets the rotational speed of the electric motor to a first speed, which is a low speed, during flight of the aircraft in which the flight control actuator works and the takeoff/landing actuator does not work, and
the controller makes the rotational speed of the electric motor faster than the first speed and higher as the required flow rate increases during takeoff and landing of the aircraft in which the flight control actuator and the takeoff/landing actuator work.

6. A method for controlling a hydraulic system,
the hydraulic system includes
a variable displacement pump connected to at least one hydraulic device through a supply path and that supplies hydraulic fluid to the hydraulic device through the supply path, the variable displacement pump including a mechanical compensator that changes a pump displacement by receiving a pressure of the hydraulic fluid in the supply path,
an electric motor coupled to the variable displacement pump and that drives the variable displacement pump,
a controller electrically connected to the electric motor and that controls operation of the variable displacement pump by outputting a control signal to the electric motor, and
a sensor that outputs, to the controller, a measurement signal relating to a supply flow rate of the hydraulic fluid supplied to the hydraulic device,
the method comprising:
in a low flow rate range where a discharge flow rate of the variable displacement pump is low, causing the controller to set a rotational speed of the electric motor to a first speed, which is a low speed, and increasing the pump displacement of the variable displacement pump, by the compensator, as a required flow rate of the hydraulic device increases, and
in a high flow rate range where the discharge flow rate is higher than in the low flow rate range, maximizing the pump displacement of the variable displacement pump, by the compensator, and causing the controller, based on the measurement signal of the sensor, to set the rotational speed of the electric motor faster than the first speed and higher as the required flow rate increases.
